# EUROPÄISCHE PATENTSCHRIFT

(11) **EP 2 069 093 B1**
(45) Veröffentlichungstag und Bekanntmachung des Hinweises auf die Patenterteilung: **14.10.2015**
(21) Anmeldenummer: 07801262.2
(22) Anmeldetag: 16.08.2007
(51) Int. Cl.: B23D 33/08

(54) **NIEDERHALTER FÜR BLECHSCHEREN**
HOLD-DOWN DEVICE FOR PLATE SHEARS
SUPPORT POUR CISAILLES A TOLE

(30) Priorität: 27.09.2006 DE 102006047078
(43) Veröffentlichungstag der Anmeldung: 17.06.2009
(73) Patentinhaber: SMS group GmbH, 40237 Düsseldorf (DE)
(72) Erfinder: BOHN, Andreas, 57271 Hilchenbach (DE); BAUR, Thomas, 57271 Hilchenbach (DE); MEINHARDT, Ulrich, 57271 Hilchenbach (DE)
(74) Vertreter: Klüppel, Walter
(86) Internationale Anmeldenummer: PCT/DE2007/001472
(87) Internationale Veröffentlichungsnummer: WO 2008/037240

(56) Entgegenhaltungen:
- DE-A1- 2 946 718
- DE-C- 239 479
- DE-C- 416 424
- DE-C- 616 577
- DE-C2- 3 546 859
- GB-A- 2 208 363

## Beschreibung

Die Erfindung betrifft einen Niederhalter für Blechscheren, der durch einen mechanisch gesteuerten, nicht variablen Hub auf ein zu schneidendes Blech aufdrückbar ist nach dem Oberbegriff des Patentanspruchs 1. Ein solcher Niederhalter ist aus DE 616 577 C bekannt.

Der Niederhalter hat die Aufgabe während des Schnittes das Blech auf den Untermessertisch zu drücken. Während des Blechtransportes muss er frei vom Blech sein. Im Einzelnen laufen dabei folgende Zyklen ab: Vortransport, Sicherheitswinkel, Schnitt, Sicherheitswinkel, Vortransport.

Der Niederhalter muss in der Praxis üblicherweise den kompletten Blechdickenbereich von ca. 5 mm bis ca. 50 mm abdecken. Dies erfordert einen großen Hub des Niederhalters. Die Auslegung des Niederhalters erfolgt auf das dünnste Blech, um hier die notwendige Andrückkraft zu erzielen. Sein konstanter Hub wird in Federpaketen kompensiert. Dies hat zur Folge, dass bei dickeren Blechen die Andrückkraft zunimmt. Dickere Bleche benötigen aber weniger bzw. keine Andrückkraft, da das Eigengewicht höher ist. Der Niederhalter läuft durch seine mechanische Kopplung ständig mit und ist im Hub nicht variabel.

Aus der DE 35 46 859 C2 ist ein Niederhalter für Blechscheren bekannt, der über Kniehebel mit gleichbleibendem Hub bewegbar ist.

Der Erfindung liegt die Aufgabe zugrunde, einen Niederhalter zu schaffen, der in Bezug auf die Andrückkraft veränderbar ist und somit höhere Standzeit und kürzere Hübe und wiederum geringere Schaltzeiten ermöglicht.

Gelöst wird diese Aufgabe erfindungsgemäß mit einem Niederhalter nach Anspruch 1.

Der erfindungsgemäß verstellbare Niederhalter wird auf ein konstantes Maß über der Oberkante des Bleches positioniert und hat damit für jede Blechdicke den gleichen Federweg, d. h. die gleiche Andrückkraft. Der Hub kann dadurch verringert und somit die Schaltzeit verkürzt werden. Der Niederhatter kann früher auf das Blech aufsetzen und länger seine Kraft ausüben. Der Niederhalter ist zu Schnittbeginn auf dem Blech und wird erst bei Schnittende abgehoben. Durch weiteres Verstellen über die Endlagen des Niederhalters kann dieser auch dieser abgeschaltet werden, wobei hierzu der Rollenhebel von der Kurvenscheibe abhebbar ist.

Nach einer weiteren Ausgestaltung können zwischen den Teilen der Gewindestange Federn vorgesehen sein, durch die das Gewinde spielfrei gehalten wird, um das Gewinde vor Beschädigungen zu schützen und insbesondere um Bewegungen durch die Spiele bei Kraftwechsel zu vermeiden.

Im Folgenden wird die Erfindung anhand eines Ausführungsbeispiels schematisch in einer Zeichnung gezeigt und nachfolgend beschrieben.

Dabei zeigt die
Fig.1 eine schematische Darstellung eines Vertikalschnittes eines Niederhalters vor dem Hub, die
Fig.2 eine schematische Darstellung eines Vertikalschnittes eines abgesenkten Niederhalters, und die
Fig.3 eine schematische Darstellung eines Vertikalschnittes eines abgeschalteten Niederhalters.

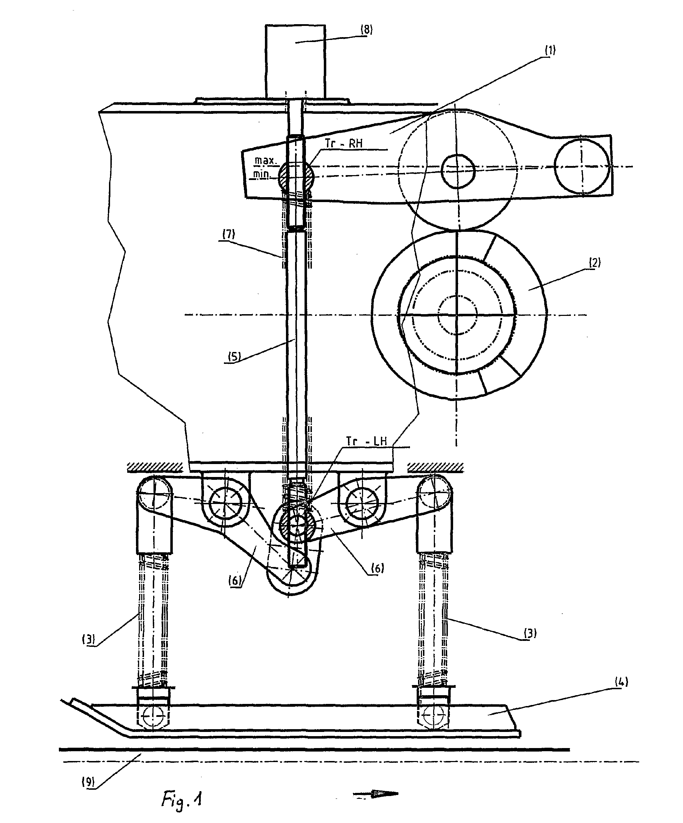

In Fig. 1 ist ein Ausführungsbeispiel eines Niederhalters in einem Vertikalschnitt dargestellt. Das dargestellte Ausführungsbeispiel weist einen Niederhalter 4 auf, der vor dem Hub von dem Blech 9 abgerückt ist. Der Niederhalter 4 ist beidseitig und beweglich von Betätigungshebeln 6 gehalten, welche über die Gewindestange 5 mit Rechts- und Linksgewinde mit dem sich auf- und abbewegbaren Ende des Rollenhebels 1 verbunden sind, der über die Kurvenscheibe 2 betätigbar ist. Die nicht variable Hubbewegung des Rollenhebels 1 kann somit auf den Niederhalter 4 übertragen werden. Die Ausgangslage des Niederhalters 4 bestimmt sich aus der effektiven Entfernung zwischen Rollenhebel 1 und Betätigungshebeln 6, die durch Drehen der Gewindestange 5 veränderbar ist. Die Gewindestange 5 kann durch den Antrieb 8 derart eingestellt werden, dass sich die Ausgangslage des Niederhalters 4 auf einer konstanten Höhe über dem Blech einstellen läßt. Dies kann beispielsweise dann erfolgen, wenn ein mit einer neuen Blechdicke zu schneidenes Blech dem Schneidprozess zugeführt wird. Um Beschädigungen an dem Gewinde der Gewindestange 5 zu vermeiden, sind die Gewinde durch die Feder 7 verspannt.

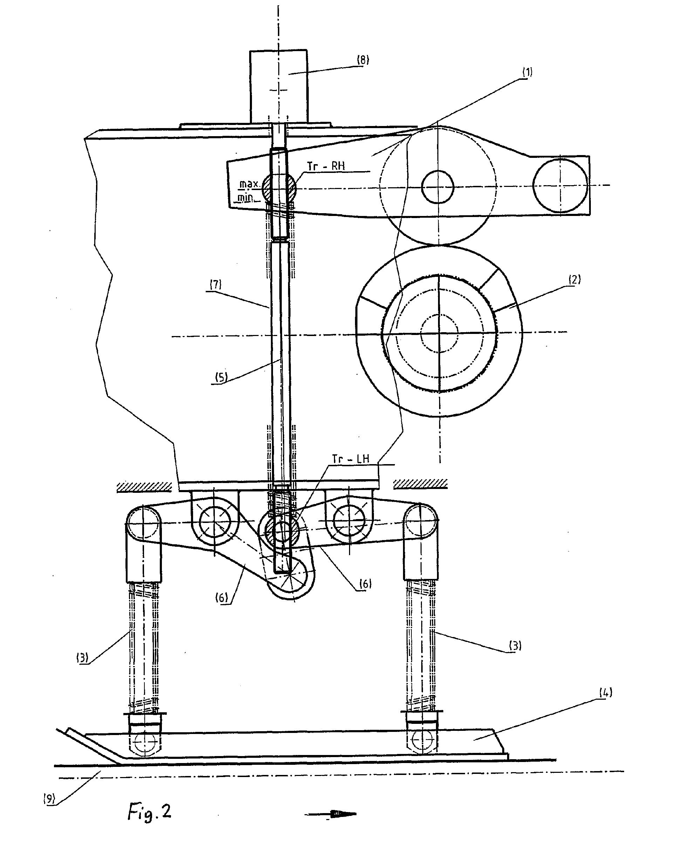

Die Fig. 2 zeigt ein Ausführungsbeispiel eines Niederhalters in gleicher Ansicht wie in Fig. 1., wobei hier der Niederhalter 4 auf das Blech 9 niedergedrückt ist. In dieser Position steht die Kurvenscheibe 2 mit ihrem großem Radius in Eingriff mit dem Rollenhebel 1. Die Federpakete 3 zwischen Betätigungshebein 6 und Niederhalter 4 sind zusammengedrückt. Sie kompensieren die Differenz zwischen dem längeren Hub und der kürzeren Strecke zwischen Blech und Ausgangslage des Niederhalters 4. Da erfindungsgemäß, die Strecke zwischen Blech und Ausgangslage des Niederhalters 4 konstant gehalten werden kann für unterschiedliche Blechdicken, können die Bleche 9 mit konstanter Kraft niedergedrückt werden.

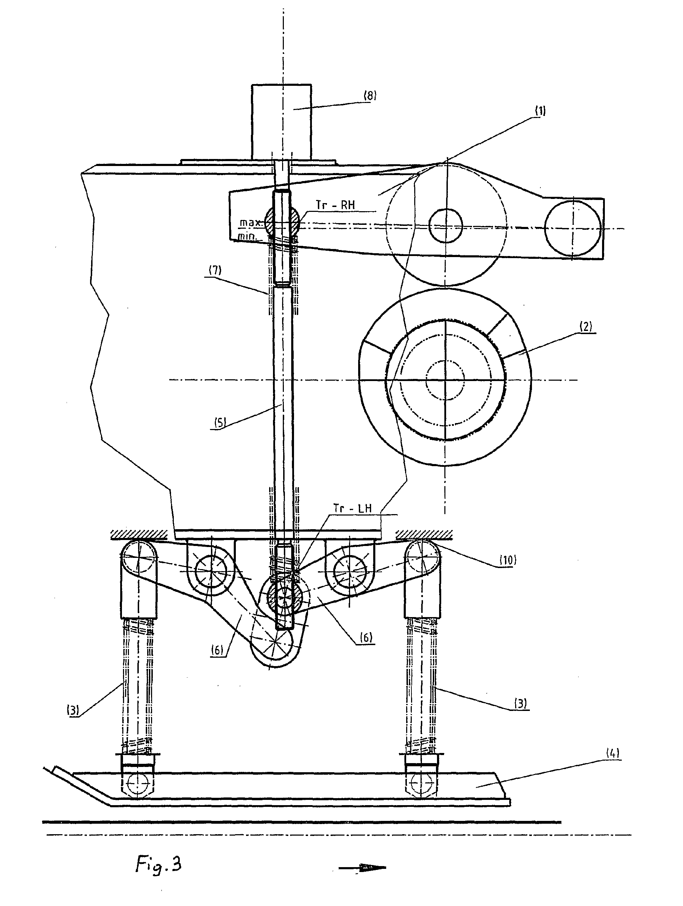

Die Fig.3 zeigt den Niederhalter der Fig. 1 und 2 in gleicher Ansicht, aber im abgeschalteten Zustand. Hierzu wird durch Drehen der Gewindestange 5 der Abstand zwischen den Betätigungshebeln 6 und dem Rollenhebel 1 soweit verlängert, dass zuerst der Niederhalter 4 in eine Endlage angehoben wird, in der die Betätigungshebel 6 an einen Anschlag 10 anliegen und durch weiteres Drehen der Gewindestange 5 der Rollenhebel 1 von der Kurvenscheibe 2 abgehoben wird. Das Abschalten des Niederhalters 4 eignet sich für Schneidvorgänge an dicken Blechen, die durch ihr Eigengewicht schon ausreichend niedergedrückt werden.

## Patentansprüche

1. Niederhalter (4) für Blechscheren, der durch einen mechanisch gesteuerten, nicht variablen Hub auf ein zu schneidendes Blech aufdrückbar ist, wobei das Anheben durch einen Rollenhebel (1) mittels Kurvenscheibe (2) erfolgt und zwischen Rollenhebel und Niederhalter Betätigungshebel (6) vorgesehen sind,
**dadurch gekennzeichnet,**
**dass** die Ausgangslage des Niederhalters vor Beginn des Hubes einstellbar ist,
**dass** zwischen dem Rollenhebel (1) und den Betätigungshebeln (6) eine Gewindestange (5) mit Rechts- und Linksgewinde vorgesehen ist, mittels der die Entfernung zwischen dem Rollenhebel und den Betätigungshebeln durch Drehen variierbar ist und dass der Rollenhebel (1) von der Kurvenscheibe (2) abhebbar ist.

2. Niederhalter nach Anspruch 1,
**dadurch gekennzeichnet,**
**dass** zwischen den Betätigungshebeln (6) und dem Niederhalter (4) Druckfedern (3) vorgesehen sind.

3. Niederhalter nach einem der vorstehenden Ansprüche,
dadurch gekennzeichent,
dass die Gewindestange (5) über einen Antrieb (8) drehbar ist.

## Claims

1. Holding-down device (4) for plate shears, which can be pressed by a mechanically controlled non-variable stroke onto a plate to be cut, wherein raising is carried out by a roller lever (1) by means of a cam disc (2) and actuating levers (6) are provided between roller lever and holding-down device, **characterised in that** the start position of the holding-down device before start of the stroke is settable, that a spindle (5) with righthand and lefthand threads, by means of which the distance between the roller lever and the actuating levers is variable by rotation, is provided between the roller lever (1) and the actuating levers (6) and that the roller lever (1) can be lifted off by the cam disc (2).

2. Holding-down device according to claim 1, **characterised in that** compression springs (3) are provided between the actuating levers (6) and the holding-down device (4).

3. Holding-down device according to one of the preceding claims, **characterised in that** the spindle (5) is rotatable by way of a drive (8).

## Revendications

1. Serre-flan (4) destiné à des cisailles pour tôles, qui peut être amené par pression sur une tôle qui doit être cisaillée via un levage invariable, commandé par voie mécanique, dans lequel le soulèvement a lieu via un levier à galet (1) au moyen d'un disque à cames (2) et des leviers d'actionnement (6) sont prévus entre le levier à galet et le serre-flan, **caractérisé en ce que** la position de départ du serre-flan peut être réglée avant le début du levage ; **en ce qu'**une tige filetée (5) comprenant des filets de vis droite et gauche est prévue entre le levier à galet (1) et les leviers d'actionnement (6), au moyen de laquelle on peut faire varier par rotation l'écartement entre le levier à galets et les leviers d'actionnement ; et **en ce que** le levier à galet (1) peut être soulevé par rapport au disque à cames (2).

2. Serre-flan selon la revendication 1, **caractérisé en ce qu'**on prévoit des ressorts de pression (3) entre les leviers d'actionnement (6) et le serre-flan (4).

3. Serre-flan selon l'une quelconque des revendications précédentes, **caractérisé en ce que** la tige filetée (5) peut être entraînée en rotation via une commande (8).
